# EUROPEAN PATENT APPLICATION

(11) **EP 4 803 645 A1**
(43) Date of publication of application: **09.09.2026**
(21) Application number: 24884819.4
(22) Date of filing: 30.10.2024
(51) Int. Cl.: C22C 38/18, C22C 38/12, C22C 38/14

(54) **CORROSION-RESISTANT ROLLED CLAD STEEL PLATE FOR HIGH-TEMPERATURE EQUIPMENT AND MANUFACTURING METHOD THEREFOR**

(30) Priority: 31.10.2023 CN 202311425082
(71) Applicant: BAOSHAN IRON & STEEL CO., LTD., Shanghai 201900 (CN)
(72) Inventor: LIU, Zili, Shanghai 201900 (CN); ZHANG, Hanqian, Shanghai 201900 (CN); HOU, Hong, Shanghai 201900 (CN); LIU, Huibin, Shanghai 201900 (CN)
(74) Representative: V.O.
(86) International application number: PCT/CN2024/128498
(87) International publication number: WO 2025/092819

(57) **Abstract**

A corrosion-resistant rolled clad steel plate for high-temperature equipment and a manufacturing method therefor. The clad steel plate comprises a base material, a cladding layer, and a transition layer between the base material and the cladding layer; in percentage by weight, the base material is prepared from the following components: C: 0.08%-0.18%, Si: 0.01%-0.6%, Mn: 0.30%-0.70%, Ti: 0.009%-0.015%, Als: 0.010%-0.015%, Nb: 0.0010%-0.050%, Cr: 1.85%-3.85%, Mo: 0.5%-1.55%, B: 0.0007%-0.0050% N: 0.0025%-0.0050%, P ≤ 0.010%, S ≤ 0.010%, O ≤ 0.004%, and the balance being Fe and other unavoidable impurities. The present invention fully accounts for interfacial characteristics of the clad steel plate, ensures the corrosion resistance of the cladding layer stainless steel, is suitable for high-temperature equipment at operating temperatures of 450-530°C, and is widely applicable in energy industries such as thermal energy, petroleum refining, and the chemical industry.

## Description

### Technical Field

The present disclosure relates to a corrosion-resistant steel and a method for manufacturing the same, particularly to a corrosion-resistant rolled clad steel plate for high-temperature equipment and a method for manufacturing the same, suitable for high-temperature equipment with operating temperatures of 450 to 530°C in the fields of electric power, petrochemical engineering and other energy production.

### Background Art

Along with the rapid development of China's economy, the demand for electricity and various energy-related raw materials such as petroleum and fertilizers is increasing. To enhance energy production efficiency, it is imperative to make energy production and processing equipment larger, highly parameterized (higher temperature, higher pressure) and lighter. This demand for equipment upgrade imposes higher requirements on the performances of the steel plates used for manufacturing the equipment. Specifically, these steel plates must have not only higher strength and hardness, but also excellent toughness, processing and forming performances, and especially better corrosion resistance. Stainless steel has excellent corrosion resistance, while carbon steel has a good balance of strength and toughness. If the advantages of stainless steel and carbon steel are combined, the resulting composite material will have both high strength and high corrosion resistance. Clad steel plates of low alloy steel + various corrosion-resistant materials are high-performance composite materials. Due to their high mechanical strength and strong corrosion resistance, they are frequently used in such sectors as crude oil processing and energy & chemical industry.

The traditional production process for clad steel plates is explosive cladding. The main problem with this production process is that when an explosive is used to carry out the explosive cladding, the explosion generates a large amount of harmful gases, which has an adverse impact on the environment. In other words, this type of production process does not meet the environmental protection requirements. In addition, the bonding rate at the interface of the explosion clad steel plate is low, sometimes failing to meet the requirement of a bonding rate of at least 97%. When this type of steel plate is used to manufacture various high-temperature, high-pressure, and large-scale container equipment, there will be notable safety concerns. Once the bonding joint of the clad steel plate breaks, the equipment will malfunction, which will have a huge impact on the personnel and property safety.

Compared to explosion clad steel plates, rolled clad steel plates have a bonding rate that is significantly increased to at least 99%, and the production process is more environmentally friendly than explosive cladding. Therefore, in recent years, the production scale and engineering application of rolled clad steel plates have been expanding year by year.

However, no matter in the case of an explosion clad steel plate or a rolled clad steel plate, a certain transition layer is generated at the interface between the carbon steel and the corrosion-resistant material. The complex composition of the transition layer can negatively impact the strength of the carbon steel matrix and the corrosion resistance of the corrosion-resistant material. In particular, the carbon element in the base carbon steel material enters the stainless steel at the bonding interface in a large amount through the transition layer, forming a large number of carbides, which leads to intergranular corrosion of the stainless steel. When the corrosion resistance of stainless steel is affected considerably, the corrosion-resistant material will have a great risk of failure, especially under high temperature process conditions. Once the material fails and, in turn, the equipment malfunctions, a major industrial production accident will be incurred, resulting in casualties and huge economic losses.

Therefore, in order to improve the comprehensive performances of a rolled clad steel plate, an urgent requirement is to reasonably design the alloy composition and production process of the carbon steel base layer, and minimize the negative impact of the decrease in corrosion resistance of the corrosion-resistant material caused by the diffusion of the carbon element from the base carbon steel material to the stainless steel through the transition layer due to long-term high-temperature service.

Chinese Patent Application Publication No. CN108231273A discloses a method for improving the interface of a copper-aluminum composite material. The invention discloses a method for improving the interface of a copper-aluminum composite material. The main technical solution includes pre-coating or pre-depositing graphene at the copper-aluminum interface, and then processing and bonding the copper, aluminum and grapheme, wherein the coating or deposition process is one of coating, electroplating, and chemical vapor deposition; the processing and bonding process is one of rolling bonding, extrusion bonding, and drawing bonding; and the graphene is a powder or a film. In this technical solution, graphene is added to the copper-aluminum interface, which can ensure the bonding at the interface while preventing formation of brittle intermetallic compounds with poor conductivity at the interface, thereby improving the bonding at the interface and the conductivity of the interface. The materials used in this invention are copper and aluminum, and the main purpose of adding the graphene material at the interface is to improve the conductivity of the material. Because the properties of these two metals, copper and aluminum, differ greatly from those of low-alloy steel and stainless steel, and a clad steel plate of carbon steel and stainless steel does not need improved electrical conductivity, the method for improving the interfacial properties of the composite material in this patent application is not applicable to a rolled clad steel plate of low-alloy steel and stainless steel.

Chinese Patent Application Publication No. CN108239725A discloses "A High Shear Strength Rolled Clad Steel Plate and Manufacturing Method of SAME". This high shear strength rolled clad steel plate comprises a carbon steel base layer and a stainless steel cladding layer rolled onto the carbon steel base layer. The mass percentages of the chemical elements in the carbon steel base layer are: C: 0.17%-0.25%; Si: 0.15%-0.40%; Mn: 1.15%-1.50%; Mo: 0.45%-0.60%; Ni: 0.40%-0.70%; Al: 0.020-0.040%; Ca: 0.0010-0.0030%; and a balance of Fe and other unavoidable impurities. The high shear strength rolled clad steel plate has a tensile strength of 570-690 MPa at room temperature, a yield strength of ≥365 MPa at room temperature, a shear strength of ≥350 MPa, and an elongation of ≥20%. In this patent application, the inventors have achieved high shear strength performance of the clad steel plate by controlling the microstructure proportion of the carbon steel material. However, there is no mention of controlling the structure or precipitates at the interface in the material of this invention.

Chinese Patent Application Publication Number CN108085585A discloses "A High-strength Corrosion-resistant Clad Patterned Steel and Manufacturing Method of SAME". In this rolled clad steel plate, the base layer is carbon steel, and the cladding layer is austenitic stainless steel. The thickness of the clad steel plate is no more than 10 mm. The inventors directly assemble the carbon steel slab and the austenitic stainless steel slab, and subject the assembly to hot rolling and a coiling process to obtain a rolled clad plate coil finally. The target steel type of this patent application for invention is a hot-rolled clad plate coil product with a thickness of 10 mm or less. Its processing temperature is generally room temperature. The invention does not involve the influence of high-temperature process conditions on the corrosion resistance of the cladding material at the interface of the composite material.

In view of the above patent applications, the existing technologies for rolled clad steel plates, especially those for clad plates of carbon steel and stainless steel, have given little consideration to the transition layer at the interface where the base layer and the cladding material are bonded. In particular, they have almost completely ignored the issue of the diffusion of alloying elements, especially carbon, from the carbon steel material to the interface, which could cause a significant decrease in the corrosion resistance of stainless steel and ultimately lead to a risk of material failure. Therefore, the technical solutions in the published patent applications have basically not taken any specific measures to reduce the possibility of weakening the stainless steel's corrosion resistance at the interface of the composite material by the carbides precipitated at the grain boundaries of the stainless steel. As a matter of fact, in the chemical and energy industries, the operating temperature of clad steel plate manufacturing equipment is often in the range of 450-530 °C. If it operates at such a high temperature for a long time, the elements at the material interface may diffuse again. In particular, the carbon element on the carbon steel side diffuses into the stainless steel cladding layer, forming more carbides of larger size, which further reduces the corrosion resistance of the stainless steel and renders latent danger of accidents.

### Summary of the Invention

One object of the present disclosure is to provide a corrosion-resistant rolled clad steel plate for high-temperature equipment and a method for manufacturing the same. The interface characteristics of the clad steel plate are fully considered, and the corrosion resistance of the stainless steel in the cladding layer can be ensured. The clad steel plate is suitable for high-temperature equipment with an operating temperature of 450-530 °C, and can be widely used in energy industries such as thermal power, petroleum refining, and chemical engineering. As used herein, "high temperature" in the context of high-temperature equipment refers to 450-530 °C.

To achieve the above object, the technical solution of the present disclosure is as follows:
In the clad steel plate of the present disclosure, a large number of finely dispersed MC (M represents one or more of Cr, Mo, Nb, Ti) precipitates with stable high-temperature properties forms in the base carbon steel. These stable carbide precipitates can fix the carbon element of the steel in the base carbon steel, thereby avoiding diffusion and migration of the carbon element from the carbon steel to the interface of the rolled clad steel plate under high temperature process conditions of 450°C to 530°C. Such diffusion and migration would lead to an increase in the carbon element concentration in the stainless steel near the interface, and in turn, lead to generation of a large number of carbide precipitates at the stainless steel grain boundaries, thereby inducing intergranular corrosion, and ultimately weakening or even losing the anti-corrosion function of the clad material.

Specifically, the corrosion-resistant rolled clad steel plate for high-temperature equipment according to the present disclosure is made by bonding and rolling carbon steel as a substrate and stainless steel as a cladding layer. Therefore, the corrosion-resistant rolled clad steel plate for high-temperature equipment according to the present disclosure comprises a substrate layer, a cladding layer, and a transition layer between the substrate layer and the cladding layer, wherein the substrate layer comprises the following components by weight percentage: C: 0.080%-0.180%, Si: 0.01%-0.60%, Mn: 0.30%-0.70%, Ti: 0.009%-0.015%, Als: 0.0100%-0.0150%, Nb: 0.0010%-0.050%, Cr: 1.85%-3.85%, Mo: 0.5%-1.55%, B: 0.0007%-0.0050%, N: 0.0025%-0.0050%, P≤0.010%, S≤0.010%, O≤0.004%, and a balance including Fe and other unavoidable impurities.

The surface microstructure of the substrate layer is 90-95% by area of bainite + 5-10% by area of martensite + MC precipitates, and the central microstructure of the substrate layer is 90-95% by area of bainite + 0-5% by area of martensite + 0-5% by area of ferrite + MC precipitates, wherein M represents one or more of Cr, Mo, Nb, and Ti, the average major axis length of the MC precipitates is less than 400 nm, and the bulk density of the MC precipitates with a major axis length of less than 400 nm is greater than 3.0 × 10⁴ precipitates/mm³.

The microstructure of the cladding layer comprises MC precipitates, where M represents one or more of Cr, Mo, Nb, and Ti, the average major axis length of the MC precipitates is less than 700 nm, and the bulk density of the MC precipitates is less than 1.0 × 10⁴ precipitates/mm³.

Further, the balance of the substrate layer of the clad steel plate is Fe and other unavoidable impurities.

Still further, the substrate layer of the clad steel plate further comprises at least one of the following chemical elements: 0 < Ca ≤ 0.0055%, 0 < Ni ≤ 0.65%, and 0 < Cu ≤ 0.55%.

Preferably, the proportion of the MC precipitates with a major axis length of less than 400 nm in the substrate layer of the clad steel plate is greater than 50% of the total number of the MC precipitates.

In some embodiments, the area percentage content of ferrite in the central microstructure of the substrate layer is 1-5%, preferably 2-5%.

Preferably, the stainless steel mentioned herein may be any type of stainless steel well known in the art, including but not limited to austenitic stainless steel, ferritic stainless steel, duplex stainless steel, or super stainless steel. The present disclosure can be implemented using a readily available stainless steel product or self-prepared stainless steel as a cast slab for the cladding layer in the present disclosure.

In some embodiments, the stainless steel comprises the following components by weight percentage: C: 0.01-0.05%; Si: 0.50-0.80%; Mn: 1.10-1.50%; Ni: 6.5-9.5%; Cr: 15.0-22.0%; N: 0.060-0.120%; P: ≤0.015%; S: ≤0.005%; O: ≤0.005%; a balance of Fe and other unavoidable impurities.

Preferably, the proportion of the MC precipitates with a major axis length of less than 700 nm in the cladding layer of the clad steel plate is greater than 50% of the total number of the MC precipitates.

Further, the microstructure of the cladding layer of the clad steel plate may comprise an extremely small amount of σ phase, with the proportion of the σ phase (by area) being ≤1.5%, preferably, the proportion of the σ phase near the transition layer being ≤0.5%.

Preferably, the thickness of the substrate layer of the clad steel plate is ≥6 mm, and the thickness of the cladding layer is ≥2 mm; preferably, the thickness of the transition layer is ≤250 µm. In some implementations, the thickness of the substrate layer is 6-200 mm. In some embodiments, the thickness of the substrate layer is 10-200 mm or 15-150 mm. In some embodiments, the thickness of the cladding layer is 2-20 mm. In some embodiments, the thickness of the transition layer is 1-250 µm. In some embodiments, the thickness of the transition layer is 1-150 µm. In some embodiments, the thickness of the transition layer is 1-50 µm or 2-30 µm. In the present disclosure, the thicknesses of the substrate layer and the cladding layer are measured in accordance with GB/T 6396-2008, and the thickness of the transition layer is measured in accordance with GB/T 6462-2005.

The substrate of the rolled clad steel plate of the present disclosure has a yield strength of ≥455MPa, a tensile strength of ≥535MPa, a percentage reduction of area of ≥65%, an elongation of ≥18%, an impact absorption energy at -40 °C of ≥120 J, and an impact absorption energy at -60 °C of ≥70 J; the grain size grade of the substrate is not lower than 7.0; and the rolled clad steel plate has a shear strength of ≥330 MPa.

In some embodiments, the yield strength of the substrate layer of the clad steel plate of the present disclosure is ≥470 MPa. In some embodiments, the yield strength of the substrate layer of the clad steel plate of the present disclosure is ≥480 MPa. In some embodiments, the yield strength of the substrate layer of the clad steel plate of the present disclosure is between 455 MPa and 515 MPa.

In some embodiments, the tensile strength of the substrate layer of the clad steel plate of the present disclosure is ≥550 MPa. In some embodiments, the tensile strength of the substrate layer of the clad steel plate of the present disclosure is ≥570 MPa. In some embodiments, the tensile strength of the substrate layer of the clad steel plate of the present disclosure is between 535 MPa and 635 MPa.

In some embodiments, the percentage reduction of area of the substrate layer of the clad steel plate of the present disclosure is ≥70%. In some embodiments, the percentage reduction of area of the substrate layer of the clad steel plate of the present disclosure is between 65% and 75%.

In some embodiments, the elongation of the substrate layer of the clad steel plate of the present disclosure is ≥20%. In some embodiments, the elongation of the substrate layer of the clad steel plate of the present disclosure is between 18% and 25%.

In some embodiments, the substrate layer of the clad steel plate of the present disclosure has an impact absorption energy at -40 °C of ≥150 J. In some embodiments, the substrate layer of the clad steel plate of the present disclosure has an impact absorption energy at -40 °C of ≥180J. In some embodiments, the substrate layer of the clad steel plate of the present disclosure has an impact absorption energy at -40 °C of 120-255 J, such as 180-255 J.

In some embodiments, the substrate layer of the clad steel plate of the present disclosure has an impact absorption energy at -60 °C of ≥100 J. In some embodiments, the substrate layer of the clad steel plate of the present disclosure has an impact absorption energy at -60 °C of ≥130 J. In some embodiments, the substrate layer of the clad steel plate of the present disclosure has an impact absorption energy at -60 °C of ≥150 J. In some embodiments, the substrate layer of the clad steel plate of the present disclosure has an impact absorption energy at -60 °C of 70-190 J, or 100-190 J, or 130-190 J, or 150-190 J.

In some embodiments, the shear strength of the clad steel plate of the present disclosure is ≥350 MPa. In some embodiments, the shear strength of the clad steel plate of the present disclosure is ≥380 MPa. In some embodiments, the shear strength of the clad steel plate of the present disclosure is ≥400 MPa. In some embodiments, the shear strength of the substrate layer of the clad steel plate at the clad interface of the present disclosure is 330-470 MPa.

In the composition designed for the clad steel plate substrate according to the present disclosure:
C: C is an important alloying element. In order to impart appropriate strength to a carbon steel plate, it's necessary to control the mass percentage of the C element in the steel to be greater than or equal to 0.08%. On the other hand, in order to improve the weldability of the carbon steel material of the substrate, it's necessary to control the upper limit of the C element content in the carbon steel. In addition, if the carbon content in the carbon steel substrate is high, the difference in carbon concentration gradients between the two materials will lead to large-scale carbon migration at the interface between the substrate and the stainless steel cladding material, causing intergranular corrosion in the stainless steel. Therefore, its upper limit is controlled to be 0.18%. In addition, by controlling the appropriate carbon content, a large number of dispersed nanoscale carbides can be formed in the steel by coordinating the composition and the process, and can further play a role in precipitation strengthening so as to improve the strength of the carbon steel of the substrate. In view of the above, the C content is controlled at 0.08-0.18% in the present disclosure.

Si: Si is also a strengthening element commonly used in low alloy steel. The addition of a certain amount of Si to steel can improve the strength performance of the steel. Meanwhile, Si also has a function of deoxidation. During a smelting process, it can play an auxiliary role in deoxidation. Most of the SiO₂ product formed after deoxidation gets into the steel slag to be removed, and thus has no influence on the performances of the steel. In addition, the addition of a certain amount of Si to steel can reduce the solubility of carbon in austenite, thereby promoting precipitation of carbon, promoting formation of MC precipitates, fixing carbon in the steel, and preventing large-scale diffusion of carbon to the interface. Therefore, a certain amount of Si needs to be added to the steel. However, an excessively high Si content may reduce the weldability of the steel. In addition, silicon has a stronger affinity for oxygen than iron, making it more likely to form low-melting-point silicates during welding. This increases the fluidity of slag and molten metal, causing spattering and affecting the quality of the weld joint. Therefore, controlling the silicon content within a certain range helps to improve the weldability and formability of the steel. Hence, the Si content is controlled at 0.01-0.60% in the present disclosure. In some embodiments, the Si content is controlled at 0.05-0.60% or 0.20-0.60% in the present disclosure.

Mn: Mn is also an important strengthening element, which can effectively improve the strength of the substrate steel plate. In addition, Mn is an element that can stabilize austenite effectively. The addition of a certain amount of Mn can increase the hardenability of steel. Therefore, in order to guarantee the strength of the steel, the lower limit of the Mn content is 0.30%. However, Mn is very prone to causing center segregation in steel. Adding excessive Mn will cause severe segregation at the center of the thickness of the steel plate, reducing the low-temperature toughness at the core of the steel plate. Therefore, the upper limit of the Mn content is limited to 0.70%. In view of the above, the Mn content is controlled at 0.30%-0.70% in the present disclosure.

Ti: As a deoxidizing element, Ti participates in the deoxidation reaction during a smelting process, which facilitates precise control of the oxygen level of molten steel. After deoxidation, Ti can form Ti₂O₃ particles, thereby promoting formation of intracrystalline ferrite and improving the low-temperature impact toughness of the steel. At the same time, Ti is also a strong carbide-forming element and nitride-forming element. In the present disclosure, on the one hand, the addition of an appropriate amount of the Ti element enables formation of stable MC precipitates in the steel, fixing the carbon element in the substrate, and preventing it from diffusing to the interface of the composite material. In addition, the Ti element partially participates in fixing the free N element in the steel to form TiN precipitates. The TiN precipitates can prevent growth of austenite grains, refine the grains, and improve the strength and toughness of the steel plate. Ti fixes some of the free nitrogen element, which helps to prevent combination of the B element and the N element to form BN precipitates. This ensures that the B element in the steel exists in a free state, improving the hardenability of the steel and ensuring that the steel plate has excellent strength performances. In the alloy system of the present disclosure, when the Ti content is less than 0.009%, the amount of TiN and Ti₂O₃ formed is rather low, and the pinning effect on austenite grains is weakened. Therefore, the Ti content in the steel is controlled to be not less than 0.009%. However, when the Ti content in steel is too high, the size of the TiN and Ti₂O₃ particles becomes larger, which makes these precipitates no longer able to hinder austenite growth and formation of intragranular ferrite. Instead, they are likely to become a source of crack initiation, reducing the low-temperature impact toughness of the steel. Therefore, the upper limit of Ti is 0.015%. In view of the above, the Ti content is controlled at 0.009-0.015% in the present disclosure.

Cr: The addition of an appropriate amount of Cr can improve the hardenability of a steel plate, ensure the uniformity of the properties across the thickness section after quenching of a thick steel plate, and especially ensure that the core of the steel plate has high strength and toughness. The addition of the Cr element to steel can improve the oxidation resistance of the steel plate when it is processed at a high temperature of 450-530 °C. In addition, as a strong carbide-forming element, Cr in the steel can combine with free carbon in the steel plate to form stable MC carbides, thereby fixing the free carbon in the carbon steel and preventing the carbon element from diffusing into the interface to affect the corrosion resistance of the cladding material. When the Cr content in steel is low, its effect on the hardenability of a thick steel plate is weakened. At the same time, stable carbides formed are reduced, and thus its function of fixing free carbon is weakened. Therefore, in the present disclosure, the Cr content is not less than 1.85%. However, a high Cr content will reduce the steel plate's resistance to temper embrittlement, which is not favorable for the steel plate to work at a high temperature for a long time. Therefore, the upper limit of the Cr content is set at 3.85%. For the reasons mentioned above, the Cr content in the present disclosure is controlled at 1.85-3.85%.

Mo: Mo is a strong carbide-forming element. Mo can improve the high-temperature creep strength of a steel plate by combining with interstitial elements such as carbon and nitrogen to form a solid solution. The addition of an appropriate amount of Mo also allows formation of small and stable MC carbide precipitates, which can achieve precipitation strengthening on the one hand, and fix free carbon in carbon steel on the other hand. When the Mo content in the alloy system is less than 0.50, the carbide density is low, and the effects of precipitation strengthening and carbide fixation are reduced. However, when the Mo content in the steel is high, the precipitate is more likely to ripen and become larger in size, thus weakening its precipitation strengthening effect. In view of the above, the Mo content is controlled at 0.50-1.55% in the present disclosure.

Acid-soluble Als: Al is an important deoxidizing element that forms alumina inclusions. Moreover, the Al element can combine with the N element in steel to form AlN precipitates, which reduces the content of free N in the steel. This prevents the combination of B and N in the steel, increases the free B content in the steel, improves the hardenability of the steel, and helps to improve the strength performances of the steel plate. However, if the content of acid-soluble aluminum in the steel is too high, the size of the deoxidation product, alumina, will increase. Since the alumina inclusions have a strong ability to adhere to each other, large alumina agglomerates will form. On the one hand, they will clog the nozzle during steelmaking and affect the casting process of molten steel. If these large agglomerated inclusions enter the steel plate, they will cause the steel plate to fail the inclusion rating and flaw detection. Therefore, the content of acid-soluble Al is controlled at 0.0100-0.0150% in the present disclosure.

Nb: Nb is a strong carbide-forming element. The Nb element can combine with the carbon element in steel to form MC precipitates, thereby stabilizing the carbon element in the steel and preventing the carbon element from diffusing to the interface. Meanwhile, the addition of an appropriate amount of Nb can increase the recrystallization temperature of the steel. When the steel is recrystallized in the austenite region and rolled, the austenite grains will not grow rapidly, resulting in fine-grained steel with higher strength and toughness. However, when the Nb content in the steel is too high, it will result in a larger MC precipitate size, which will reduce the toughness of the steel plate and worsen the toughness of the weld heat-affected zone. Therefore, the Nb content is controlled at 0.0010-0.050% in the present disclosure. In some embodiments, the Nb content is controlled at 0.010-0.050% in the present disclosure.

B: The purpose of adding an appropriate amount of the B element is to compensate for the decrease in the strength performances of a steel plate due to the decrease in the solid-solution carbon content in the steel after fixing the free carbon in the steel by forming stable carbides. If the B element in the steel exists in a free state, some of it will preferentially occupy grain boundary sites, thus improving the hardenability of the steel plate. Its function depends on a precondition that B must exist in a free state within the steel. Therefore, in order to prevent boron in the steel from combining with oxygen and nitrogen to form boron oxide and boron nitride, the oxygen and nitrogen contents in the steel must be well controlled, which is also a key point in alloy composition design. However, it should be noted that if too much boron is added to the steel, the excessive boron will easily lead to heavy segregation at the grain boundaries, which will be detrimental to the toughness of the steel. Therefore, the B content is controlled at 0.0007-0.0050% in the present disclosure.

N: In the design of the alloy composition in the present disclosure, appropriate amounts of the Ti and Al elements are added. These two elements can form TiN and AlN precipitates with the N element in the steel. When these precipitates are fine and dispersed, they can refine austenite grains, thereby improving the strength and toughness of the steel plate. However, when the nitrogen content in the steel is too high, the surplus nitrogen will combine with the boron element in the steel to form BN, which consumes the free boron element in the steel and thus reduces the effect of the boron element on improving the strength of the steel plate. At the same time, too much nitrogen will have an adverse effect on the toughness of the steel, especially when the content of the solid-solution nitrogen exceeds 0.005%, which will significantly reduce the low-temperature toughness of the steel plate. Therefore, the N content is controlled at 0.0025-0.0050% in the present disclosure.

Preferably, the substrate of the rolled clad steel plate for high-temperature equipment according to the present disclosure further comprises at least one of the following chemical elements: 0 < Ca ≤ 0.0055%, 0 < Ni ≤ 0.65%, and 0 < Cu ≤ 0.55%.

In the above technical solution of the present disclosure, the Ca, Ni and Cu elements can all further improve the performances of the steel plate for high-temperature equipment according to the present disclosure.

Ca: Ca is a strong deoxidizing element. Adding an appropriate amount of calcium allows control of the oxygen content in steel, thereby preventing oxidation of the B element. However, if the Ca content in the steel exceeds 0.0055%, large inclusions of calcium oxide and calcium sulfide tend to form in the steel, which is detrimental to the toughness of the steel. Therefore, the Ca content is controlled at 0 < Ca ≤ 0.0055% in the present disclosure.

Ni: Ni is a typical element for stabilizing austenite. It can significantly improve the hardenability of a steel plate, as well as the low-temperature toughness of the steel plate. However, Ni is expensive. With the production cost of the steel plate taken into account, it is not advisable to add an excessive amount of Ni to the steel. Therefore, the Ni content is controlled at 0 < Ni ≤ 0.65% in the present disclosure.

Cu: The addition of an appropriate amount of Cu to the substrate of the rolled clad steel plate for high-temperature equipment according to the present disclosure helps to improve the strength of the steel and enhance the corrosion resistance of the steel. However, if the content of Cu added to the steel is too high, the steel plate tends to have high-temperature brittleness at high temperatures. Therefore, the Cu content is controlled at 0<Cu≤0.55% in the present disclosure.

It should be noted that the addition of the above-mentioned Ca, Ni and Cu elements will increase the cost of the material. Taking into account both the performances and the cost control, preferably, at least one of the above-mentioned elements may be added in the technical solution according to the present disclosure.

The substrate of the clad steel plate according to the present disclosure comprises unavoidable impurities, including P ≤ 0.010%, S ≤ 0.010%, and O ≤ 0.004%.

P, S, and O are all impurity elements in steel. When technical conditions permit, the contents of the impurity elements in the steel should be minimized in order to obtain a steel material having better performances and higher quality.

P: P is a harmful element for most steel plates. The main reason is that phosphorus (P) segregates extremely easily towards grain boundaries, weakening the bonding force between atoms at the grain boundaries and causing temper embrittlement of the steel plate. Especially, when the steel plate is processed at high temperature conditions, the temper embrittlement effect of the P element is further exacerbated. Therefore, in the substrate of the rolled clad steel plate for high-temperature equipment according to the present disclosure, the mass percentage content of the P element is controlled at P≤0.010%.

S: It's extremely easy for the S element in steel to combine with the Mn element in the steel to form MnS inclusions. The higher the S content, the larger the size of the MnS inclusions formed, which is detrimental to the strength and toughness of the steel plate. At the same time, an unduly high sulfur content will lead to center segregation in the slab, and also tend to cause hot cracking. Therefore, in the substrate of the rolled clad steel plate for high-temperature equipment according to the present disclosure, the mass percentage content of the S element is controlled at S≤0.010%.

O: The oxygen element in steel mainly exists in the form of oxides. When the O content in the steel is too high, it suggests that there are too many oxides in the steel, and large inclusions are likely to be present, which affects the strength and toughness of the steel plate. Therefore, in the substrate of the rolled clad steel plate for high-temperature equipment according to the present disclosure, the mass percentage content of the O element is controlled at O≤0.004%.

The surface microstructure of the substrate layer of the clad steel plate according to the present disclosure is 90-95% bainite and 5-10% martensite, and the central microstructure is 90-95% bainite (B) and 0-5% martensite (M) + 0-5% ferrite (F). To ensure that the tensile strength and low-temperature impact performance of the substrate layer of the clad steel plate meet the requirements, it is necessary to ensure that 90-95% of the microstructure of the surface layer and the center of the steel plate along the thickness is bainitic. The 5-10% martensite microstructure in the surface layer of the steel plate can further improve the strength of the steel plate at the surface to compensate for the strength reduction caused by the partial conversion of the free carbon element into carbides during the subsequent high-temperature service. The 0-5% ferrite in the central microstructure helps to improve the low-temperature impact toughness, thus compensating for the toughness reduction in the center of the plate along the thickness due to segregation.

The substrate layer in the present disclosure has stable MC precipitates, wherein M represents one or more of Cr, Mo, Nb, and Ti, and the average major axis length of the MC precipitates is less than 400 nm. A large precipitate size can adversely affect the mechanical properties of the steel plate, especially its low-temperature impact toughness. Hence, the present disclosure requires controlling the average major axis length of the MC precipitates in the steel plate to be less than 400 nm. In the present disclosure, it's desirable to form small-sized carbide precipitates as many as possible in the substrate layer to ensure that the carbon fixation effect of the carbides is fully exerted without adversely affecting the mechanical properties of the steel plate due to carbide precipitation. Therefore, the proportion of MC precipitates with a major axis length of less than 400 nm to the total number of MC precipitates is limited to more than 50%.

Preferably, the bulk density of the MC precipitates with a major axis length of less than 400 nm in the substrate layer is greater than 3.0×10⁴ precipitates/mm³. The purpose of forming MC precipitates in the steel is to fix the free carbon element in the steel. Therefore, in the present disclosure, it is necessary to ensure that the bulk density of MC with a major axis length of less than 400 nm is greater than 3.0×10⁴ precipitates/mm³ so as to effectively control the carbon element in the steel and avoid heavy diffusion of the free carbon element to the stainless steel side. In some embodiments, the bulk density of the MC precipitates with a major axis length of less than 400 nm in the substrate layer is ≥ 3.5×10⁴ precipitates/mm³. In some embodiments, the bulk density of the MC precipitates with a major axis length of less than 400 nm in the substrate layer is from 3.5×10⁴ precipitates/mm³ to 4.8×10⁴ precipitates/mm³.

Preferably, the proportion of the MC precipitates with a major axis length of less than 400 nm in the substrate layer is greater than 50% of the total number of the MC precipitates. In the present disclosure, the "bulk density" of the MC precipitates is measured according to the method described in Standard YB/T 5320-2006. In the present disclosure, it's desirable to form small-sized carbide precipitates as many as possible to ensure that the carbon fixation effect of the carbides is fully exerted without adversely affecting the mechanical properties of the steel plate due to carbide precipitation. Therefore, the proportion of MC precipitates with a major axis length of less than 400 nm to the total number of MC precipitates is limited to more than 50%.

The cladding layer material of the clad steel plate according to the present disclosure has stable MC precipitates, wherein M represents one or more of Cr, Mo, Nb, and Ti, and the average major axis length of the MC precipitates is less than 700 nm. The larger the size of the carbides in the cladding layer material, the greater the impact on the corrosion resistance of the stainless steel. Therefore, it is desirable for the size of the carbide precipitates in the cladding layer material to be as small as possible. However, in the production process of the cladding layer material and the rolled clad steel plate, some carbide precipitates are inevitably generated. In order to ensure the corrosion resistance of the rolled clad steel plate, the present disclosure requires that the average major axis length of the MC precipitates in the cladding layer material be less than 700 nm. In some embodiments, the average major axis length of the MC precipitates in the cladding layer material of the present disclosure is ≤ 675nm, typically in the range of 600-675 nm.

The bulk density of the MC precipitates in the cladding layer material of the present disclosure is less than 1.0×10⁴ precipitates/mm³. As for controlling the number of carbide precipitates in the cladding layer material, it is desirable to have as few carbides as possible, that is, to control the bulk density as low as possible. However, some carbides will inevitably form during the heat treatment of the clad steel plate. Controlling the bulk density of carbides to less than 1.0×10⁴ precipitates/mm³ can guarantee superior corrosion resistance of the cladding layer material.

Preferably, the proportion of the MC precipitates with a major axis length of less than 700 nm in the cladding layer material of the present disclosure is greater than 50% of the total number of the MC precipitates. In the present disclosure, the "bulk density" of the MC precipitates is measured according to the method described in Standard YB/T 5320-2006. In order to minimize the carbide precipitates in the cladding layer material to increase the corrosion resistance of the cladding layer material, the present disclosure limits the size and number of the MC precipitates, that is, the proportion of the MC precipitates with a major axis length of less than 700 nm is greater than 50% of the total number of the MC precipitates. If the quantity and size of the carbide precipitates exceed the limits, the corrosion resistance of the cladding layer material will be reduced notably, affecting the safe service performance of the rolled clad steel plate. In some embodiments, the proportion of the MC precipitates with a major axis length of less than 700 nm in the cladding layer material of the present disclosure is greater than or equal to 55% of the total number of the MC precipitates.

The cladding layer in the present disclosure is stainless steel (including austenitic stainless steel, ferritic stainless steel, martensitic stainless steel, duplex stainless steel, super stainless steel, and other stainless steel products). The σ phase in stainless steel is an intermetallic phase with high hardness and low plasticity. When it is present in stainless steel, especially when it precipitates along grain boundaries, it will have a large impact on the plasticity of the steel, resulting in a significant reduction in the impact toughness of the steel. Therefore, the σ phase proportion in the stainless steel is ≤1.5%. Especially, the σ phase proportion is ≤0.5% near the bonding interface (transition layer).

The present disclosure further provides a method for manufacturing the rolled clad steel plate for high-temperature equipment, including the following steps:
1) Smelting and casting, preparing cast slabs for a substrate and a cladding layer

The above-mentioned composition is smelted and cast into a cast slab for a substrate. During the smelting process, deoxidizers Si+Mn, Al, and Ti alloy are added sequentially to the molten steel for deoxidation. First, Si+Mn and Al are added for pre-deoxidation. After pre-deoxidation, the oxygen level of the molten steel is 0.0020%-0.0075%. Then, Ti is added for final deoxidation. After deoxidation, the B element is added, followed by other alloying elements. After homogenization, casting is carried out using the injection method. At the same time, stainless steel is prepared or provided as a cast slab for a cladding layer.

### 2) Assembling slabs

The cast slabs for the substrate and the cladding layer are surface treated, and then stacked. After stacking, the periphery of the clad slab is welded and sealed, vacuumed, and sealed again. Preferably, the vacuum degree after vacuuming is 8-60 Pa.

### 3) Rolling the clad slab

The clad slab is heated to 1080-1250 °C and then subjected to two-stage rolling. In the first stage, the slab is rolled to an accumulated reduction rate of no less than 60% (e.g., 60-70%). In the second stage, the slab is rolled to an accumulated reduction rate of no less than 20% (e.g., 20-30%), and the reduction rate in the last pass is 8-18%. The total accumulated reduction rate of the two stages of rolling is not less than 80% (e.g., 80-97%). The final rolling temperature is at least 880 °C (e.g., 880-960 °C).

### 4) Heat treatment: quenching and tempering the clad steel plate

Preferably, in step 2), the surfaces of the cast slabs for the substrate and the cladding layer are processed to ensure that the cast slab surfaces are free of obvious surface defects such as oil stains, slag inclusions, and cracks, while ensuring that the roughness of the processed surfaces of the cast slabs is not greater than 2.0Ra.

Preferably, in step 4), the quenching temperature is 945-985 °C; the quenching hold time is T1=(1-1.2) H; after the hold time is over, the clad steel plate is removed from the quenching furnace and water-cooled to room temperature, wherein the unit of T1 is min, and H is the thickness of the substrate layer in mm.

Preferably, in step 4), the tempering temperature is 690-735 °C; the tempering hold time is T2=(1-1.5) H; after the hold time is over, the clad steel plate is removed from the tempering furnace and water-cooled to room temperature, wherein the unit of T2 is min, and H is the thickness of the substrate layer in mm.

In the manufacturing method of the present disclosure:
According to the present disclosure, a large number of uniformly dispersed nanoscale MC precipitates are desirably generated in the substrate of the clad steel plate. The MC precipitates serve to fix the free carbon element in the carbon steel substrate, thereby preventing the carbon element from diffusing to the interface between the substrate and the cladding material in large quantities to cause formation of carbides in the stainless steel and, in turn, degradation of its corrosion resistance. As a result, the service safety performance of the rolled clad steel plate for high-temperature equipment is improved. However, free carbon in steel is a major strengthening element for a carbon steel substrate. When most of the free carbon element is fixed in the form of MC, the strength of carbon steel will decrease. In order to compensate for the strength loss due to the fixation of the carbon element, it's necessary to add the B element to improve the hardenability of the steel plate. The function of the B element to improve the hardenability mainly depends on free B distributed along the grain boundaries. Because B is an extremely active element, it can combine with oxygen in molten steel to form boron oxide on one hand, and on the other hand, boron can also combine with N easily to form boron carbide. Therefore, in the technical solution of the present disclosure, the deoxidation sequence of molten steel and the timing of the addition of B are designed specifically. That is, during deoxidation, Si and Mn are used for pre-deoxidation first, and most of the silicon oxide and manganese oxide float to the top slag. Using the strong deoxidizer Al for deoxidation, the oxygen level (determined according to the method for measuring oxygen content in molten steel as described in ISO 14284:1996) can be controlled relatively precisely at 0.0020%-0.0075%. Then, Ti is used for final deoxidation, forming a large amount of Ti oxide. At the same time, Ti added can combine with the free nitrogen element in the steel to form TiN. In other words, the addition of Ti further reduces the free oxygen concentration in the steel. Within a certain range of oxygen level (0.0020-0.0075%), the size of the Ti₂O₃ inclusions formed after deoxidation is suitable (2-5 µm), which is beneficial for the formation of some acicular ferrite structure during solidification and subsequent phase transformation, thus improving the toughness of the steel plate. In addition, Ti can also combine with N in the steel to generate some TiN. On the one hand, this reduces the adverse effect of solid-solution nitrogen on the toughness of the steel. On the other hand, TiN can precipitate at high temperatures during solidification to pin the growth of austenite and refine the original austenite grains. Once the contents of oxygen and titanium elements in the steel are properly controlled, an appropriate amount of B is added. This ensures that the B element added exists primarily in a free state in the steel, thereby guaranteeing that the substrate steel plate has high hardenability, and thus significantly improving the strength of the steel plate. Most importantly, the sequence of deoxidizer addition and the oxygen level control technology described above allow formation of a large amount of uniformly dispersed, fine (2-5µm), spherical oxide Ti₂O₃ in the steel. This oxide can serve as nucleation sites for subsequent carbide precipitation. Because these carbide nucleation sites are distributed uniformly and diffusely in the steel, it can be ensured that the precipitated carbides are also distributed uniformly and diffusely in the steel, while ensuring that their quantity is large and their size is small, so as not to have an adverse effect on the mechanical properties of the substrate.

In step 2), the surfaces of the cast slabs for the substrate and the cladding layer are processed to ensure that the cast slab surfaces are free of obvious surface defects such as oil stains, slag inclusions, and cracks, while ensuring that the roughness of the processed surfaces of the cast slabs is not greater than 2.0Ra. After vacuuming, the vacuum degree is 8-60 Pa, which ensures the rolling effect of the clad slab.

In step 3), the reason for heating the clad slab to 1080-1250 °C for rolling is as follows: if the heating temperature is less than 1080 °C, the carbides and nitrides in the cast slab for the substrate cannot be dissolved completely, which will reduce the pinning effect of the carbides on the austenite grains during rolling; at the same time, within this temperature range, it is beneficial to the homogenization of austenite in the cladding layer material, and the carbides in the cladding layer material can also be dissolved completely. If the cast slab is heated to a temperature higher than 1250 °C, it can easily cause a rapid growth of austenite grains in the substrate and the cladding layer material, damaging the mechanical properties of the steel.

In addition, the accumulated reduction rate of the slab in the first stage of rolling is not less than 60%, the accumulated reduction rate in the second stage of rolling is not less than 20%, the reduction rate in the last pass is 8-18%, the total accumulated reduction rate of rolling is not less than 80%, and the final rolling temperature is at least 880 °C.

The first-stage high-temperature and high-reduction rolling process allows the material to fully recrystallize during the rolling deformation process, and allows continuous refining of austenite grains, while inhibiting formation of large austenite grains in the steel, thereby improving the low-temperature toughness of the steel. If the accumulated reduction rate in the first stage is less than 60%, the austenite grain size in the steel is large, which is not conducive to the strength and toughness of the steel plate.

When the accumulated reduction rate in the second stage of rolling is not less than 20%, the refinement of austenite grains can be further promoted. When the reduction rate of the final rolling pass is 8-18%, the dislocation density in the steel can be increased, and the strength of the steel plate can be guaranteed. If the reduction rate is less than 8%, the dislocation density is low, which is not conducive to improvement of the strength. If the reduction rate is higher than 18%, the rolling torque is too large, which is detrimental to the rolling equipment. If the final rolling temperature is lower than 880 °C, the deformation resistance of the steel plate increases, making it difficult to guarantee a large final rolling reduction rate.

During the quenching process, if the quenching temperature is lower than 945 °C, the homogenization of austenite in the steel takes a long time, which reduces the heat treatment efficiency. If the quenching temperature of the steel is higher than 985 °C, some austenite in the carbon steel tends to grow, which easily leads to formation of a mixed crystal structure, not conducive to the uniformity of the steel structure. Accordingly, if the hold time T1 for the steel at the quenching temperature is less than 1H, sufficient austenitization cannot be achieved. If the hold time T1 for the steel at the quenching temperature exceeds 1.2H, it will extend beyond the time required for austenitization of the steel, thus reducing the efficiency of the quenching process.

During the tempering process, if the tempering temperature of the steel is lower than 690 °C, a longer tempering time is required to remove the residual quenching stress in the steel, which will reduce the tempering efficiency and slow down the formation rate of MC precipitates in the carbon steel. If the tempering temperature of the steel is higher than 735 °C, the MC precipitates in the steel are prone to Ostwald coarsening and agglomeration, which is not conducive to formation of fine and dispersed MC precipitates in the steel. Accordingly, if the tempering hold time T2 is less than 1.0H, the quenching stress of the steel tends to be unable to be removed completely. If the tempering hold time T2 is more than 1.5H, the MC precipitates in the steel are prone to coarsening and will reduce the production efficiency of the tempering process.

Compared with the prior art, the advantages and beneficial effects of the present disclosure are as follows:
In the present disclosure, the finely dispersed spherical (2-5µm) oxide Ti₂O₃ formed in the steel can act as nucleation sites for the MC carbide precipitates. This allows formation of a large quantity of dispersed nanoscale MC (M represents one or more of Cr, Mo, Nb, and Ti) precipitates in the steel, thereby fixing the free carbon element in the carbon steel, preventing diffusion and aggregation of the carbon element towards the clad interface (transition layer), reducing precipitation of carbides at the grain boundaries of the stainless steel, and ensuring the corrosion resistance of the rolled clad steel plate. Particularly, when this rolled clad steel plate is used for high-temperature equipment, under high-temperature process conditions of 450 °C - 530 °C, the high-melting-point oxide Ti₂O₃ (having a melting point of 2130 °C) can still exist stably in the steel and continue to play a role as the precipitation nuclei of MC carbides. In other words, some of the free carbon element present in steel can still react with alloying elements in the steel using Ti₂O₃ as nucleation sites to form fine MC carbides, thereby further fixing the carbon element, ensuring that the carbon element in the carbon steel does not diffuse to the interface, and thus protecting the corrosion resistance of the rolled clad steel plate under long-term high-temperature service conditions.

Further, regarding the smelting process in the production of low-alloy high-strength steel, a typical smelting technology in the prior art involves deoxidation of killed steel with aluminum, wherein the oxygen content in the steel is controlled within a target range by aluminum deoxidation. This technology is characterized by high deoxidation efficiency, but a large amount of large-sized Al₂O₃ inclusions tend to form in the steel. These inclusions tend to aggregate in the steel to form inclusion aggregates, causing the steel plate to fail flaw detection and the rating of mechanical properties or inclusions. At the same time, most of the Al₂O₃ inclusions have an irregular polyhedral block morphology, so that they cannot serve as nucleation sites for the carbides to promote uniform, dispersed distribution of the carbides. Therefore, in aluminum-killed steel, carbide precipitates tend to aggregate at grain boundaries and are relatively large, which has an adverse effect on both the conventional and high-temperature properties of the steel.

The present disclosure enables control of the deoxidation product in the steel to be high-melting-point, finely dispersed spherical oxide Ti₂O₃ (2-5 µm) by optimizing the production process, i.e., by controlling the type of the deoxidizer, the sequence of deoxidation, and the amount of the deoxidizer added during steelmaking. Compared with the Al₂O₃ inclusions formed in traditional aluminum-killed steel, this oxide is less prone to aggregation and growth, has no sharp edges, is harmless to flaw detection and the mechanical properties of the steel plate, and can optimize the type of the structure of the steel plate. The precipitation of TiN refines austenite grains. By designing the order of adding the alloys to the steel, the oxidation and nitridation of the B element are reduced, which allows full utilization of the B element added to maximize the hardenability of the steel plate, refine the grains, and ensure high strength and superior low-temperature toughness of the steel plate.

Further, by controlling the smelting process, especially by controlling the type of the deoxidizer, the sequence of deoxidation, and the amount of the deoxidizer added, the finely dispersed spherical oxide Ti₂O₃ (2-5µm) formed in the steel can serve as nucleation sites for MC carbide precipitates. In coordination with the design of the optimized alloy composition and the design of the heat treatment process, a large amount of dispersed nanoscale MC (M represents one or more of Cr, Mo, Nb, and Ti) precipitates can be formed in the steel. This enables fixation of the free carbon element in the carbon steel, preventing diffusion and aggregation of the carbon element towards the clad interface (transition layer), reducing precipitation of carbides at the grain boundaries in the stainless steel, and guaranteeing the corrosion resistance of the rolled clad steel plate. Particularly, when this rolled clad steel plate is used for high-temperature equipment, under high-temperature process conditions of 450 °C - 530 °C, the high-melting-point oxide Ti₂O₃ (having a melting point of 2130 °C) formed by controlling the smelting process can still exist stably in the steel and continue to play a role as the precipitation nucleus of MC carbides. In other words, some of the free carbon element present in steel can still react with alloying elements in the steel using Ti₂O₃ as nucleation sites to form fine MC carbides, thereby further fixing the carbon element, ensuring that the carbon element in the carbon steel does not diffuse to the interface, and thus protecting the corrosion resistance of the rolled clad steel plate under long-term high-temperature service conditions.

The rolled clad steel plate for high-temperature equipment produced according to the present disclosure has excellent corrosion resistance and can be effectively used in energy and chemical industries as a material for manufacturing vessels for reactions at temperatures as high as 450-530 °C. It has great practical significance and a very broad application prospect.

### Detailed Description

The present disclosure will be further explained and described below with reference to the specific Examples. Nevertheless, such explanation and description do not constitute any undue limitation on the technical solution of the present disclosure.

The compositions of the Examples in the present disclosure are shown in Table 1. The balance includes Fe and other unavoidable impurities. In each of the Examples and Comparative Examples, the cladding layer material of the rolled clad steel plate is austenitic stainless steel which is used as an example for demonstration. The manufacturing process parameters for the Examples of the present disclosure are shown in Table 2. Commercially available austenitic stainless steel may be used as a slab for the cladding layer.

The manufacturing method in the Examples of the present disclosure includes the following steps:
1) Smelting and casting: Smelting and continuous casting were carried out using the chemical compositions shown in Table 1 to obtain slabs. The smelting equipment was a 500 kg vacuum induction furnace. First, 420 kg industrially pure iron was added to the vacuum induction furnace. At the same time, a certain amount of CaO was added to the furnace according to the alloy formulation of the steel (the added CaO was used for slag formation during smelting). A vacuum was drawn, and smelting was carried out under a minimum vacuum of about 25 Pa. Argon gas was filled for atmosphere protection during the smelting process. After the pure iron was melted down, deoxidizers Si+Mn and Al were added in sequence for pre-deoxidation. According to the online monitoring results of the molten steel composition, the amount of the deoxidizers added was adjusted finely, and the oxygen level of free oxygen in the molten steel was controlled to be 0.0020%-0.0075%. Then, an appropriate amount of Ti was added for final deoxidation. Alloys such as Nb, Cr, and Mo were added for alloying treatment. Finally, B was added. The casting was carried out by injection to form a cast slab.
2) Assembling: The carbon steel cast slab for the substrate and the stainless steel cast slab for the cladding layer were surface treated. The roughness of surfaces of the two materials to be joined was ≤2.0Ra. After surface inspection, it was ensured that surfaces were free of surface defects such as oil stains, slag inclusions, and cracks. The carbon steel cast slab for the substrate and the stainless steel cast slab for the cladding layer were stacked to form a clad slab. After welding the periphery of the clad slab, a vacuum was drawn to 8-60Pa.
3) Rolling: The clad slab was heated at 1080-1250 °C and then rolled in two stages. The total accumulated reduction rate of the rolling was not less than 80%, the accumulated reduction rate of the slab in the first stage of rolling was not less than 60%, the accumulated reduction rate in the second stage of rolling was not less than 20%, the reduction rate of the last pass was 8-18%, and the final rolling temperature was at least 880 °C.
4) Heat treatment: Quenching and tempering were performed on the rolled clad steel plate. For the quenching treatment on the clad steel plate, the quenching temperature was 945-985 °C, and the quenching hold time T1 was 1-1.2H. After the hold time was over, the plate was removed from the furnace and water-cooled to room temperature. Then, the tempering treatment was performed. The tempering temperature was 690-735 °C, and the tempering hold time T2 was 1-1.5H. After removing from the furnace, the plate was air-cooled.

In the present disclosure, the chemical compositions and related processes designed for the clad steel plates of Examples 1 to 8 all meet the design specifications of the present disclosure.

Accordingly, the clad steel plates of Comparative Examples 1 to 5 were manufactured using substantially the same process steps as in Example 1, except that the alloying element contents in the substrate carbon steel in Comparative Examples 1 to 4 were outside of the designed range, while the alloying element contents in Comparative Example 5 were still within the designed range. However, for Comparative Examples 1 to 5, the order of adding the deoxidizers and the alloying element B in the smelting and casting operations of step 1) above was different; and the tempering process in the heat treatment was different.

Electrolytic samples were taken from the carbon steel substrate material and the cladding layer stainless steel side of the clad interface in each of the clad steel plates of Examples 1 to 8 and the control rolled clad steel plates of Comparative Examples 1 to 5 in the present disclosure. Electrolytic extraction was used to extract the MC precipitates from the carbon steel of the substrate and the stainless steel of the cladding layer. The precipitates of different sizes were separated by using filter membranes with different particle sizes. The particle size distribution of the precipitates was detected using a laser particle size analyzer, and an image analysis software was used to confirm the quantity and size distribution of the MC precipitates (M represents one or more of Nb, Ti, Cr, and Mo) in each of the steel plates of the Examples and Comparative Examples. Finally, the data obtained from the above observation and analysis are listed in Table 3 (substrate material) and Table 4 (cladding layer material at the bonding interface, i.e., transition layer).

As shown in Table 3, the total number of precipitates in the substrate carbon steel of the rolled clad steel plates in Examples 1 to 8 ranges from 747 to 908, far more than the number of precipitates in the substrate carbon steel in Comparative Examples 1 to 5 (from 467 to 547). This indicates that by implementing the technical solution of the present disclosure, a greater number of MC (M is one or more of Cr, Mo, Ti, and Nb) carbide precipitates can be formed in the substrate carbon steel in Examples 1 to 8, thereby ensuring the effect of fixing the free carbon in the carbon steel by means of the stable carbides in the carbon steel substrate as designed in the technical solution. Further, the MC precipitates in the substrate carbon steel of the rolled clad steel plates in Examples 1 to 8 are relatively small in size, mainly ranging from 100 nm to 600 nm. The MC precipitates have an average major axis length of less than 400 nm and a bulk density of higher than 3.0×10⁴ precipitates/mm³. The proportion of MC precipitates with a size of less than 400 nm to the total number of MC precipitates is more than 50%. When the precipitates are small in size, they can pin the growth of austenite grains to some extent, thereby refining the grains and further improving the strength and toughness of the material.

In contrast, the MC precipitates in the substrate carbon steel of the rolled clad steel plates in Comparative Examples 1 to 5 have a larger size, with an average major axis length of greater than 800 nm. The precipitate size is distributed mainly over a range of ≥800 nm, and the proportion of precipitates with a size of at least 1000 nm is relatively high. Their pinning effect on austenite grains is not good, which leads to a larger grain size and affects the strength and toughness of the steel plate. Because the number of stable precipitates formed in the carbon steel in Comparative Examples 1 to 5 is small, less free carbon in the substrate carbon steel is fixed by the precipitates. As a result, a large amount of free carbon segregates towards the bonding interface (transition layer), leading to precipitation of a lot of carbides along grain boundaries in the cladding layer material at the bonding interface, thereby reducing the corrosion resistance of the cladding layer material at the bonding interface.

As shown in Table 4, the number of MC (M is one or more of Cr, Mo, Ti, Nb) precipitates detected in the cladding layer material near the transition layer in the clad steel plates in Examples 1 to 8 is 145-176, far less than 503-544 in Comparative Examples 1 to 5. Further, the bulk density of the MC precipitates in the cladding layer material at the bonding interface in Examples 1 to 8 is less than 1×10⁴ precipitates/mm³, whereas the bulk density of the MC precipitates in the cladding layer material at the bonding interface in Comparative Examples 1 to 5 is greater than 1.5×10⁴ precipitates/mm³. This indicates that the carbides in the substrate carbon steel in Examples 1 to 8 are effective in fixing the free carbon element in the steel. The amount of free carbon diffused into the cladding layer material through the bonding interface is small, so the amount of MC formed in the cladding layer material is also small. In Comparative Examples 1 to 5, because the carbon element was not effectively fixed by the carbide precipitates in the substrate carbon steel, the carbon element in the carbon steel diffuses into the cladding layer material in large quantities through the bonding interface. As a result, a large number of carbides exist in the cladding layer material, and the bulk density is greater than 1.5×10⁴ carbides/mm³. Meanwhile, as further shown in Table 4, in Examples 1 to 7, the MC precipitates in the cladding material at the bonding interface has an average major axis length of less than 700 nm, and the proportion of MC precipitates with a size of less than 700 nm to the total number of MC precipitates is greater than 50%. In contrast, the average size of the MC precipitates detected in the Comparative Examples is greater than 900 nm. This further illustrates that the carbides in Examples 1 to 8 are far more effective in fixing free carbon than those in Comparative Examples 1 to 5.

After analyzing the carbide precipitates in the steel plates for high-temperature equipment in Examples 1 to 8 and the comparative steel plates in Comparative Examples 1 to 5, the mechanical properties (according to Standards ASTM A370-24, ASTM A264-12 (2019)) and corrosion resistance (according to Standard ASTM A262-15 (2021) Practice E) of the steel plates in Examples 1 to 8 and Comparative Examples 1 to 5 were also tested. The test results are shown in Table 5.

As shown in Table 5, the substrate of the clad steel plate according to the present disclosure has a yield strength of ≥ 455 MPa, a tensile strength of ≥ 535 MPa, a percentage reduction of area of ≥ 65%, an elongation of ≥ 18%, an impact absorption energy at -40 °C of ≥ 120 J, and an impact absorption energy at -60 °C of ≥ 70 J. The shear strength of the clad steel plate is ≥330MPa.

The yield strength and tensile strength of the comparative carbon steel substrates are both lower than those of the Examples. This is mainly because the smelting process, the order of adding the alloying elements, and the heat treatment process for the comparative carbon steel substrates are different from those used in the Examples. Consequently, the function of the B element to improve the hardenability of the comparative steel cannot be fully utilized, and the precipitates in the steel are different and have a different effect on the microstructure of the steel plate. The surface microstructure of the substrate of the clad steel plate according to the present disclosure is 90-95% bainite + 5-10% martensite + MC precipitates, and the central microstructure of the substrate is 90-95% bainite (B) and 0-5% martensite (M) + 0-5% ferrite (F). The composition of the microstructure of the comparative carbon steel is significantly different from that in the Examples. The proportions of bainite and martensite are reduced significantly, while the proportion of ferrite is increased, which also affects the strength of the steel plate.

Further, the large number of small-sized precipitates in the carbon steel substrates in Examples 1 to 8 have further refined the austenite grains. The grain size in the substrate carbon steel in the Examples is not less than 7.5, whereas the grain size in the substrate carbon steel in the Comparative Examples is in the range of 5-5.5. It can be seen that the effect of precipitates in pinning austenite and refining grains is fully utilized in the Examples according to the technical solution of the present disclosure, which effect helps to improve the strength and toughness of the steel plate to a certain extent.

The cladding layer stainless steel at the bonding interface in the rolled clad steel plates in the Examples and Comparative Examples was sampled and subjected to corrosion test according to ASTM A262 Practice E Method. The test results are shown in Table 6. The results show that the stainless steel at the bonding interface in the rolled clad steel plates prepared according to the requirements of the present disclosure has excellent corrosion resistance. Therefore, the corrosion resistance of the cladding layer stainless steel in the clad steel plates in Examples 1-8 is far superior to that of Comparative Examples 1-5.

To sum up, in the clad steel plate for high-temperature equipment with an operating temperature of 450-530 °C according to the present disclosure, a large number of dispersed nanoscale MC (M represents one or more of Cr, Mo, Nb, and Ti) precipitates can be generated in the substrate steel by optimizing the composition design and production process, especially by controlling the type of the deoxidizer, the sequence of deoxidation, and the amount of the deoxidizer added during the steelmaking process, adding an appropriate amount of the B element at an appropriate time, in coordination with other production processes. These nanoscale MC precipitates can fix the free carbon element in the substrate carbon steel, thereby preventing the carbon element from diffusing to the bonding interface in large quantities to cause formation of a lot of carbides in the stainless steel and, in turn, degradation of its corrosion resistance. Therefore, the technical solution of the present disclosure can guarantee the strength and toughness of the carbon steel substrate. At the same time, it can greatly improve the corrosion resistance of the rolled clad steel plate, and ensure the intrinsic safety of the rolled clad steel plate during long-term service at high temperatures.

Further, it should be noted that the combinations of the various technical features in the present disclosure are not limited to the combination modes described in the claims of this application or the combination modes described in the specific Examples. All technical features described in this application can be freely combined in any way, unless they contradict each other.

It should also be noted that the Examples set forth above are only specific embodiments of the present disclosure. Obviously, the present disclosure is not limited to the above embodiments. Any similar changes or modifications made thereto that can be directly derived or easily conceived by those skilled in the art from the content disclosed in the present disclosure should fall within the protection scope of the present disclosure.

**Table 1 (Unit: weight percent)**

| | Slab | C | Si | Mn | P | S | Als | Ti | B | O | N | Cu | Ni | Nb | Ca | Cr | Mo |
|---|---|---|---|---|---|---|---|---|---|---|---|---|---|---|---|---|---|
| Ex. 1 | Substrate | 0.106 | 0.22 | 0.46 | 0.009 | 0.003 | 0.0128 | 0.009 | 0.0023 | 0.001 | 0.004 | 0.02 | 0.03 | 0.049 | 0.0004 | 2.11 | 0.65 |
| | Cladding | 0.020 | 0.73 | 1.35 | 0.011 | 0.003 | - | - | - | 0.002 | 0.091 | - | 8.5 | - | - | 18.6 | - |
| Ex. 2 | Substrate | 0.156 | 0.21 | 0.51 | 0.007 | 0.005 | 0.0151 | 0.015 | 0.0017 | 0.004 | 0.033 | 0.22 | - | 0.023 | 0.0013 | 1.86 | 0.86 |
| | Cladding | 0.020 | 0.73 | 1.35 | 0.011 | 0.003 | - | - | - | 0.002 | 0.091 | - | 8.5 | - | - | 18.6 | - |
| Ex. 3 | Substrate | 0.13 | 0.28 | 0.64 | 0.010 | 0.006 | 0.0119 | 0.014 | 0.0008 | 0.003 | 0.0038 | 0.15 | 0.18 | 0.039 | - | 3.83 | 0.56 |
| | Cladding | 0.020 | 0.73 | 1.35 | 0.011 | 0.003 | - | - | - | 0.002 | 0.091 | - | 8.5 | - | - | 18.6 | - |
| Ex. 4 | Substrate | 0.093 | 0.59 | 0.31 | 0.009 | 0.005 | 0.0106 | 0.013 | 0.0012 | 0.003 | 0.0041 | 0.49 | 0.65 | 0.041 | 0.0054 | 2.32 | 1.49 |
| | Cladding | 0.020 | 0.73 | 1.35 | 0.011 | 0.003 | - | - | - | 0.002 | 0.091 | - | 8.5 | - | - | 18.6 | - |
| Ex. 5 | Substrate | 0.115 | 0.09 | 0.66 | 0.007 | 0.006 | 0.0125 | 0.011 | 0.0035 | 0.002 | 0.004 | - | - | 0.038 | - | 1.98 | 0.97 |
| | Cladding | 0.020 | 0.73 | 1.35 | 0.011 | 0.003 | - | - | - | 0.002 | 0.091 | - | 8.5 | - | - | 18.6 | - |
| Ex. 6 | Substrate | 0.085 | 0.33 | 0.47 | 0.009 | 0.005 | 0.0137 | 0.010 | 0.0030 | 0.002 | 0.0047 | 0.08 | 0.39 | 0.011 | 0.0031 | 2.36 | 0.67 |
| | Cladding | 0.020 | 0.73 | 1.35 | 0.011 | 0.003 | - | - | - | 0.002 | 0.091 | - | 8.5 | - | - | 18.6 | - |
| Ex. 7 | Substrate | 0.142 | 0.45 | 0.32 | 0.008 | 0.004 | 0.0141 | 0.012 | 0.0049 | 0.003 | 0.0026 | - | 0.41 | 0.0011 | 0.0021 | 2.22 | 1.28 |
| | Cladding | 0.020 | 0.73 | 1.35 | 0.011 | 0.003 | - | - | - | 0.002 | 0.091 | - | 8.5 | - | - | 18.6 | - |
| Ex. 8 | Substrate | 0.178 | 0.35 | 0.69 | 0.006 | 0.002 | 0.0132 | 0.014 | 0.0028 | 0.003 | 0.005 | - | 0.11 | 0.033 | 0.0041 | 3.25 | 1.53 |
| | Cladding | 0.020 | 0.73 | 1.35 | 0.011 | 0.003 | - | - | - | 0.002 | 0.091 | - | 8.5 | - | - | 18.6 | - |
| Comp. Ex. 1 | Substrate | 0.376 | 0.61 | 0.80 | 0.011 | 0.016 | 0.0053 | 0.001 | 0.0005 | 0.0043 | 0.0053 | 0.64 | - | 0.0002 | 0.0060 | 1.08 | 0.21 |
| | Cladding | 0.020 | 0.73 | 1.35 | 0.011 | 0.003 | - | - | - | 0.002 | 0.091 | - | 8.5 | - | - | 18.6 | - |
| Comp. Ex.2 | Substrate | 0.001 | 0.73 | 0.78 | 0.019 | 0.022 | 0.0022 | 0.005 | 0.0055 | 0.0052 | 0.0063 | - | 0.79 | 0.052 | 0.0063 | 1.66 | 1.83 |
| | Cladding | 0.020 | 0.73 | 1.35 | 0.011 | 0.003 | - | - | - | 0.002 | 0.091 | - | 8.5 | - | - | 18.6 | - |
| Comp. Ex.3 | Substrate | 0.28 | 0.83 | 0.93 | 0.017 | 0.013 | 0.0181 | 0.018 | 0.0067 | 0.0049 | 0.0054 | 0.66 | 0.77 | 0.066 | - | 4.31 | 0.18 |
| | Cladding | 0.020 | 0.73 | 1.35 | 0.011 | 0.003 | - | - | - | 0.002 | 0.091 | - | 8.5 | - | - | 18.6 | - |
| Comp. Ex.4 | Substrate | 0.31 | 0.66 | 0.96 | 0.020 | 0.015 | 0.0245 | 0.017 | 0.0073 | 0.0051 | 0.0057 | 0.61 | 0.72 | 0.0005 | 0.0071 | 0.36 | 1.61 |
| | Cladding | 0.20 | 0.73 | 1.35 | 0.011 | 0.003 | - | - | - | 0.002 | 0.091 | - | 8.5 | - | - | 18.6 | - |
| Comp. Ex.5 | Substrate | 0.12 | 0.50 | 0.32 | 0.007 | 0.006 | 0.0107 | 0.012 | 0.0029 | 0.0032 | 0.0044 | 0.13 | 0.15 | 0.004 | 0.0013 | 3.15 | 1.43 |
| | Cladding | 0.020 | 0.73 | 1.35 | 0.011 | 0.003 | - | - | - | 0.002 | 0.091 | - | 8.5 | - | - | 18.6 | - |

**Table 2**

| | Substrate thickness (mm) | Cladding thickness (mm) | Transition layer thickness (µm) | Oxygen level in molten steel after Al deoxidation (%) | Slab surface roughness Ra | Clad slab vacuum Pa | Heating temperature (°C) | Final rolling temperature (°C) | 1^{st} stage reduction (%) | 2^{nd} stage reduction (%) | Final rolling reduction (%) | Total accumulated reduction (%) | Quenching temperature (°C) | Quenching hold time T1 (min) | Tempering temperature (°C) | Tempering hold time T2 (min) |
|---|---|---|---|---|---|---|---|---|---|---|---|---|---|---|---|---|
| Ex. 1 | 10 | 2 | 1 | 0.0021 | 1.2 | 21 | 1120 | 940 | 70 | 27 | 17 | 97 | 975 | 12 | 695 | 11 |
| Ex. 2 | 35 | 3 | 2 | 0.0035 | 1.6 | 9 | 1180 | 955 | 65 | 28 | 15 | 93 | 945 | 31 | 724 | 32 |
| Ex. 3 | 15 | 11 | 20 | 0.0074 | 1.5 | 36 | 1248 | 960 | 73 | 24 | 12 | 97 | 955 | 17 | 720 | 18 |
| Ex. 4 | 80 | 8 | 12 | 0.0053 | 1.0 | 47 | 1220 | 955 | 60 | 20 | 8 | 80 | 985 | 80 | 713 | 81 |
| Ex. 5 | 150 | 15 | 30 | 0.0071 | 1.8 | 58 | 1140 | 935 | 66 | 22 | 11 | 88 | 960 | 55 | 709 | 52 |
| Ex. 6 | 70 | 6 | 11 | 0.0056 | 1.9 | 26 | 1190 | 895 | 64 | 21 | 9 | 85 | 973 | 75 | 706 | 75 |
| Ex. 7 | 197 | 18 | 40 | 0.0031 | 1.7 | 22 | 1085 | 930 | 67 | 20 | 10 | 87 | 960 | 110 | 733 | 110 |
| Ex. 8 | 120 | 10 | 22 | 0.0043 | 1.8 | 21 | 1095 | 885 | 61 | 25 | 13 | 86 | 950 | 130 | 723 | 120 |
| Comp. Ex. 1 | ***10*** | **2** | ***7*** | ***0.0133*** | 2.0 | 21 | 1210 | 930 | 81 | 17 | 6 | 98 | 970 | 12 | 696 | ***120*** |
| Comp. Ex. 2 | 65 | ***5*** | 16 | *0.0118* | 1.1 | 32 | 1180 | 940 | 50 | 37 | 5 | 87 | 950 | 70 | 761 | 97 |
| Comp. Ex. 3 | 10 | ***6*** | 26 | *0.0125* | 1.3 | 42 | 1225 | 885 | 35 | 50 | 3 | 85 | 965 | 74 | 756 | 140 |
| Comp. Ex. 4 | ***18**5* | *18* | 91 | *0.0119* | 1.4 | 51 | 1085 | 921 | 65 | 16 | 4 | 81 | 955 | 89 | 771 | 85 |
| Comp. Ex. 5 | ***130*** | 13 | *38* | *0.0107* | 1.3 | 39 | 1120 | 955 | 55 | 28 | 2 | 83 | 960 | ***109*** | 739 | *120* |

**Table 3**

| No. | 0-100 nm (number) | 100-200 nm (number) | 200-300 nm (number) | 300-400 nm (number) | 400-500 nm (number) | 500-600 nm (number) | 600-700 nm (number) | 700-800 nm (number) | 800-900 nm (number) | 900-1000 nm (number) | >1000 nm (number) | Total (number) | Average size (nm) | Bulk density 10⁴/mm³ |
|---|---|---|---|---|---|---|---|---|---|---|---|---|---|---|
| Ex. 1 | 11 | 70 | 230 | 103 | 111 | 128 | 21 | 16 | 19 | 18 | 20 | 747 | 388 | 3.8 |
| Ex. 2 | 15 | 93 | 246 | 115 | 153 | 137 | 32 | 28 | 18 | 17 | 23 | 877 | 372 | 4.5 |
| Ex. 3 | 17 | 79 | 238 | 104 | 154 | 122 | 18 | 19 | 17 | 10 | 18 | 796 | 394 | 3.9 |
| Ex. 4 | 19 | 91 | 211 | 120 | 118 | 178 | 25 | 12 | 19 | 15 | 14 | 822 | 376 | 4.1 |
| Ex. 5 | 26 | 74 | 249 | 162 | 181 | 157 | 19 | 0 | 11 | 18 | 11 | 908 | 385 | 4.8 |
| Ex. 6 | 9 | 86 | 202 | 99 | 186 | 126 | 10 | 17 | 16 | 9 | 9 | 769 | 393 | 3.9 |
| Ex. 7 | 57 | 96 | 160 | 117 | 179 | 145 | 0 | 31 | 23 | 18 | 17 | 783 | 363 | 3.5 |
| Ex. 8 | 52 | 86 | 160 | 151 | 167 | 129 | 18 | 41 | 21 | 18 | 17 | 810 | 377 | 3.7 |
| Comp. Ex. 1 | 1 | 0 | 1 | 3 | 13 | 25 | 28 | 38 | 57 | 88 | 213 | 467 | 906 | 2.1 |
| Comp. Ex. 2 | 0 | 0 | 0 | 5 | 16 | 36 | 26 | 43 | 58 | 94 | 222 | 500 | 899 | 2.3 |
| Comp. Ex. 3 | 0 | 1 | 1 | 1 | 15 | 44 | 33 | 57 | 65 | 86 | 225 | 528 | 889 | 2.5 |
| Comp. Ex. 4 | 0 | 0 | 1 | 5 | 14 | 37 | 28 | 49 | 58 | 99 | 256 | 547 | 906 | 2.2 |
| Comp. Ex. 5 | 0 | 0 | 1 | 1 | 16 | 43 | 32 | 53 | 64 | 96 | 227 | 533 | 897 | 2.4 |

**Table 4**

| | 0-100 nm (number) | 100-200 nm (number) | 200-300 nm (number) | 300-400 nm (number) | 400-500 nm (number) | 500-600 nm (number) | 600-700 nm (number) | 700-800 nm (number) | 800-900 nm (number) | 900-1000 nm (number) | >1000 nm (number ) | Total (number ) | Average size (nm) | Bulk density 10⁴/mm³ |
|---|---|---|---|---|---|---|---|---|---|---|---|---|---|---|
| Ex. 1 | 1 | 5 | 15 | 16 | 12 | 26 | 37 | 21 | 18 | 12 | 1 | 164 | 622 | 0.9 |
| Ex. 2 | 1 | 0 | 17 | 16 | 15 | 21 | 38 | 35 | 15 | 12 | 5 | 175 | 618 | 0.7 |
| Ex. 3 | 2 | 8 | 16 | 12 | 17 | 26 | 28 | 40 | 13 | 11 | 3 | 176 | 620 | 0.8 |
| Ex. 4 | 0 | 6 | 18 | 9 | 12 | 20 | 43 | 31 | 7 | 14 | 5 | 165 | 651 | 0.9 |
| Ex. 5 | 0 | 4 | 19 | 15 | 18 | 22 | 30 | 19 | 10 | 18 | 1 | 156 | 612 | 0.6 |
| Ex. 6 | 1 | 8 | 17 | 10 | 15 | 19 | 20 | 30 | 17 | 6 | 2 | 145 | 622 | 0.5 |
| Ex. 7 | 1 | 0 | 11 | 9 | 15 | 26 | 25 | 37 | 11 | 15 | 8 | 158 | 668 | 0.6 |
| Ex. 8 | 0 | 1 | 14 | 10 | 18 | 26 | 22 | 28 | 13 | 15 | 9 | 156 | 671 | 0.6 |
| Comp. Ex. 1 | 1 | 8 | 9 | 13 | 22 | 12 | 38 | 31 | 65 | 178 | 128 | 505 | 915 | 1.5 |
| Comp. Ex. 2 | 7 | 9 | 0 | 14 | 16 | 30 | 51 | 27 | 89 | 151 | 150 | 544 | 921 | 1.5 |
| Comp. Ex. 3 | 0 | 1 | 2 | 11 | 12 | 41 | 50 | 28 | 92 | 143 | 148 | 528 | 955 | 1.6 |
| Comp. Ex. 4 | 7 | 6 | 0 | 12 | 14 | 30 | 49 | 27 | 87 | 121 | 150 | 503 | 911 | 1.5 |
| Comp. Ex. 5 | 8 | 5 | 2 | 11 | 13 | 44 | 51 | 31 | 91 | 131 | 142 | 529 | 945 | 1.6 |

**Table 5**

| | Substrate yield strength (MPa) | Substrate tensile strength (MPa) | Substrate percentage reduction of area (%) | Substrate elongation (%) | Substrate impact absorption energy at -40°C (J) | Substrate impact absorption energy at -60°C (J) | Clad steel plate shear strength (MPa) | Substrate grain size (grade) | Microstructure composition (%) | |
|---|---|---|---|---|---|---|---|---|---|---|
| | | | | | | | | | Surface (B+M+F) | Core (B+M+F) |
| Ex. 1 | 461 | 573 | 73 | 24 | 198 | 156 | 411 | 7.5 | 90+10+0 | 90+5+5 |
| Ex. 2 | 490 | 596 | 72 | 22 | 185 | 143 | 386 | 7.0 | 91+9+0 | 91+4+5 |
| Ex. 3 | 486 | 589 | 71 | 24 | 201 | 132 | 382 | 8 | 92+8+0 | 95+2+3 |
| Ex. 4 | 502 | 623 | 70 | 23 | 123 | 71 | 438 | 8 | 93+7+0 | 93+5+2 |
| Ex. 5 | 478 | 587 | 73 | 22 | 223 | 150 | 417 | 7.5 | 92+8+0 | 92+3+5 |
| Ex. 6 | 511 | 631 | 69 | 21 | 246 | 175 | 456 | 9 | 94+6+0 | 94+2+4 |
| Ex. 7 | 500 | 618 | 71 | 23 | 251 | 187 | 468 | 8 | 94+6+0 | 95+1+4 |
| Ex. 8 | 495 | 600 | 70 | 21 | 231 | 170 | 451 | 8 | 95+5+0 | 95+0+5 |
| Comp. Ex. 1 | 412 | 527 | 75 | 23 | 89 | 56 | 271 | 4.5 | 70+6+24 | 58+4+38 |
| Comp. Ex. 2 | 420 | 506 | 76 | 24 | 91 | 48 | 258 | 5 | 68+6+26 | 50+3+47 |
| Comp. Ex. 3 | 437 | 529 | 75 | 23 | 87 | 46 | 221 | 5.5 | 70+7+23 | 49+2+49 |
| Comp. Ex. 4 | 420 | 526 | 74 | 24 | 69 | 39 | 228 | 5 | 60+6+34 | 47+1+52 |
| Comp. Ex. 5 | 437 | 510 | 75 | 23 | 77 | 45 | 231 | 5 | 65+5+30 | 55+2+43 |

**Table 6**

| | Cracking | Qualified |
|---|---|---|
| Ex. 1 | N | Y |
| Ex. 2 | N | Y |
| Ex. 3 | N | Y |
| Ex. 4 | N | Y |
| Ex. 5 | N | Y |
| Ex. 6 | N | Y |
| Ex. 7 | N | Y |
| Ex. 8 | N | Y |
| Comp. Ex. 1 | Y | N |
| Comp. Ex. 2 | Y | N |
| Comp. Ex. 3 | Y | N |
| Comp. Ex. 4 | Y | N |
| Comp. Ex. 5 | Y | N |

## Claims

1. A corrosion-resistant rolled clad steel plate for high-temperature equipment made by bonding and rolling carbon steel as a substrate and stainless steel as a cladding layer, comprising the substrate layer, the cladding layer, and a transition layer between the substrate layer and the cladding layer, wherein the substrate layer comprises the following components by weight percentage: C: 0.080%-0.180%, Si: 0.01%-0.60%, Mn: 0.30%-0.70%, Ti: 0.009%-0.015%, acid soluble Als: 0.0100%-0.0150%, Nb: 0.0010%-0.050%, Cr: 1.85%-3.85%, Mo: 0.5%-1.55%, B: 0.0007%-0.0050%, N: 0.0025%-0.0050%, P≤0.010%, S≤0.010%, O≤0.004%, and a balance including Fe and other unavoidable impurities;
wherein the substrate layer has a surface microstructure of 90-95% by area of bainite + 5-10% by area of martensite + MC precipitates, and the substrate layer has a central microstructure of 90-95% by area of bainite + 0-5% by area of martensite + 0-5% by area of ferrite + MC precipitates, wherein M represents one or more of Cr, Mo, Nb, and Ti, the MC precipitates have an average major axis length of less than 400 nm, and a bulk density of MC precipitates with a major axis length of less than 400 nm is greater than 3.0×10⁴ precipitates/mm³;
wherein the cladding layer has a microstructure comprising MC precipitates, where M represents one or more of Cr, Mo, Nb, and Ti, the MC precipitates have an average major axis length of less than 700 nm, and a bulk density of the MC precipitates is less than 1.0×10⁴ precipitates/mm³.

2. The corrosion-resistant rolled clad steel plate for high-temperature equipment according to claim 1, wherein the substrate layer further comprises at least one of the following chemical elements: 0 < Ca ≤ 0.0055%, 0 < Ni ≤ 0.65%, and 0 < Cu ≤ 0.55%.

3. The corrosion-resistant rolled clad steel plate for high-temperature equipment according to claim 1, wherein in the substrate layer:
a Si content is 0.05~0.60% or 0.20~0.60%; and/or
a Nb content is 0.010-0.050%.

4. The corrosion-resistant rolled clad steel plate for high-temperature equipment according to any one of claims 1-3, wherein the balance of the substrate layer is Fe and other unavoidable impurities.

5. The corrosion-resistant rolled clad steel plate for high-temperature equipment according to any one of claims 1-4, wherein a proportion of MC precipitates with a major axis length of less than 400 nm in the substrate layer is greater than 50% of a total number of the MC precipitates.

6. The corrosion-resistant rolled clad steel plate for high-temperature equipment according to any one of claims 1-5, wherein the stainless steel is austenitic stainless steel, ferritic stainless steel, duplex stainless steel, or super stainless steel.

7. The corrosion-resistant rolled clad steel plate for high-temperature equipment according to any one of claims 1-6, wherein the stainless steel comprises the following components by weight percentage: C: 0.01-0.05%; Si: 0.50-0.80%; Mn: 1.10-1.50%; Ni: 6.5-9.5%; Cr: 15.0-22.0%; N: 0.060-0.120%; P: ≤0.015%; S: ≤0.005%; O: ≤0.005%; a balance of Fe and other unavoidable impurities.

8. The corrosion-resistant rolled clad steel plate for high-temperature equipment according to any one of claims 1-7, wherein a proportion of MC precipitates with a major axis length of less than 700 nm in the cladding layer is greater than 50% of a total number of the MC precipitates.

9. The corrosion-resistant rolled clad steel plate for high-temperature equipment according to any one of claims 1-8, wherein the microstructure of the cladding layer of the clad steel plate further comprises a σ phase in a proportion of ≤1.5% by area; preferably, a proportion of the σ phase near the transition layer, i.e. a bonding interface, is ≤0.5% by area.

10. The corrosion-resistant rolled clad steel plate for high-temperature equipment according to any one of claims 1-9, wherein the substrate layer of the clad steel plate has a thickness of ≥6 mm, and the cladding layer has a thickness of ≥2 mm; preferably, the transition layer has a thickness of ≤250 µm; preferably, the thickness of the substrate layer is 6-200 mm or 10-200 mm; preferably, the cladding layer has a thickness of 2-20 mm; preferably, the thickness of the transition layer is 1-230 µm, 1-150 µm or 1-50 µm.

11. The corrosion-resistant rolled clad steel plate for high-temperature equipment according to any one of claims 1-10, wherein the substrate of the rolled clad steel plate has a yield strength of ≥455MPa, a tensile strength of ≥535MPa, a percentage reduction of area of ≥65%, an elongation of ≥18%, an impact absorption energy at -40 °C of ≥120 J, and an impact absorption energy at -60 °C of ≥70 J; the substrate has a grain size of not lower than grade 7.0; and the rolled clad steel plate has a shear strength of ≥330 MPa; preferably:
the yield strength of the substrate layer of the clad steel plate is ≥470 MPa, or ≥480 MPa, or between 455 MPa and 515MPa;
the tensile strength of the substrate layer of the clad steel plate is ≥550 MPa, or ≥570 MPa, or between 535 MPa and 635 MPa;
the percentage reduction of area of the substrate layer of the clad steel plate is ≥70%, or between 65% and 75%;
the elongation of the substrate layer of the clad steel plate is ≥20%, or between 18% and 25%;
the impact absorption energy at -40 °C of the substrate layer of the clad steel plate is ≥150 J or ≥180 J, or between 120 J and 255 J, such as 180-255 J;
the impact absorption energy at -60 °C of the substrate layer of the clad steel plate is ≥100 J, ≥130 J, or ≥150 J, or between 70 J and 190 J, or between 100 J and 190 J, or between 130 J and 190 J, or between 150 J and 190 J;
the shear strength of the clad steel plate is ≥350 MPa, ≥380 MPa or ≥400 MPa, or between 330 MPa and 470 MPa.

12. A method for manufacturing the corrosion-resistant rolled clad steel plate for high-temperature equipment according to any one of claims 1-10, comprising the following steps:
1) Smelting and casting, preparing a cast slab for the substrate
wherein the components according to claim 1 or 2 or 3 or 4 are subjected to smelting and casting to form a cast slab for the substrate; during the smelting, deoxidizers Si+Mn, Al, and Ti alloy are added sequentially to molten steel for deoxidation, wherein Si+Mn and Al are added first for pre-deoxidation; after the pre-deoxidation, an oxygen level of the molten steel is 0.0020%-0.0075%; then, Ti is added for final deoxidation; after the deoxidation, B is added, followed by other alloying elements; after homogenization, casting is carried out by injection;
wherein stainless steel is prepared or provided as a cast slab for the cladding layer;
2) Assembling slabs
wherein the cast slabs for the substrate and the cladding layer are surface treated, and then stacked; after stacking, a periphery of a clad slab obtained is welded and sealed, vacuumed, and sealed again; preferably, a vacuum degree after vacuuming is 8-60 Pa;
3) Rolling the clad slab
wherein the clad slab is heated to 1080-1250 °C and then rolled in two stages, wherein in a first stage, the slab is rolled to an accumulated reduction rate of no less than 60%; in a second stage, the slab is rolled to an accumulated reduction rate of no less than 20%, and a reduction rate in a last pass is 8-18%, wherein a total accumulated reduction rate of the two stages of rolling is not less than 80%, and a final rolling temperature is at least 880 °C;
4) Heat treatment: quenching and tempering the clad steel plate.

13. The method for manufacturing the corrosion-resistant rolled clad steel plate for high-temperature equipment according to claim 12, wherein in step 2), surfaces of the cast slabs for the substrate and the cladding layer are processed to ensure that the surfaces of the cast slabs are free of obvious surface defects including oil stains, slag inclusions, and cracks, while ensuring that a roughness of the processed surfaces of the cast slabs is not greater than 2.0Ra.

14. The method for manufacturing the corrosion-resistant rolled clad steel plate for high-temperature equipment according to claim 12, wherein in step 4), a quenching temperature is 945-985 °C; a quenching hold time is T1=(1-1.2) H; after the hold time is over, the plate is removed and water-cooled to room temperature, wherein T1 is in min, and H is a thickness of the substrate layer in mm.

15. The method for manufacturing the corrosion-resistant rolled clad steel plate for high-temperature equipment according to any one of claims 12-14, wherein in step 4), a tempering temperature is 690-735 °C; a tempering hold time is T2=(1-1.5) H; after the hold time is over, the plate is removed and water-cooled to room temperature, wherein T2 is in min, and H is a thickness of the substrate layer in mm.
